(19) Europäisches Patentamt
European Patent Office
Office européen des brevets

(11) Publication number: 0 084 273 A2

(12) # EUROPEAN PATENT APPLICATION

(21) Application number: 82307035.4

(22) Date of filing: 22.12.82

(51) Int. Cl.$^3$: C 01 B 3/40

(30) Priority: 04.01.82 US 336533

(43) Date of publication of application: 27.07.83 Bulletin 83/30

(84) Designated Contracting States: BE CH DE FR GB IT LI LU NL SE

(71) Applicant: The Standard Oil Company
Patent & License Division Midland Building
Cleveland Ohio 44115(US)

(72) Inventor: Velenyi, Louis Joseph
1266 Roland Road
Lyndhurst Ohio 44124(US)

(72) Inventor: Paparizos, Christos
28748 Forest Road
Willowick Ohio 44094(US)

(72) Inventor: Pesa, Frederick Anthony
764 Circlewood Drive
Aurora Ohio 44202(US)

(74) Representative: Smith, Sydney et al,
Elkington and Fife High Holborn House 52/54 High Holborn
London WC1V 6SH(GB)

(54) **Production of synthesis gas.**

(57) A one-step process for reforming light hydrocarbons which are olefins having from 2 to 4 carbon atoms on paraffins having from 1 to 4 carbon atoms to a product gas containing at least carbon monoxide and hydrogen comprises contacting said light hydrocarbons with carbon dioxide in the presence of a catalytic amount of a catalyst comprising a porous catalyst support having a surface area greater than 1 to less than 350 $m^2$/gm and a pore volume of 0.4 to 3 cc/gm and at least one Group VIII metal or mixture thereof on a pore surface of the support in the absence of steam.

The process is particularly applicable to the reformation of methane in a one-step process to give a product gas mixture containing about equal portions of carbon monoxide and hydrogen.

EP 0 084 273 A2

# PRODUCTION OF SYNTHESIS GAS

This invention relates to an improved catalytic process for producing gas mixtures containing hydrogen and carbon monoxide by reforming light hydrocarbons.

Light hydrocarbon and, more particularly, methane reforming processes are well known. Generally, hydrocarbon reforming processes utilize steam reformation or the partial oxidation of hydrocarbons using an oxygen containing gas as the oxidant. Methane reforming processes typically produce gas mixtures containing carbon monoxide/hydrogen ratios of 1:3 according to the following chemical equation:

$$CH_4 + H_2O \longrightarrow 1\ CO + 3\ H_2 \qquad (I)$$

Since gas mixtures containing carbon monoxide/hydrogen ratios of 1/1 are particularly useful as feed gases in processes for producing higher hydrocarbons and oxygenated derivatives, such as Fischer-Tropsch processes, a higher ratio of carbon monoxide to hydrogen is generally required. In order to increase the carbon monoxide content, a water gas shift reaction has to be employed according to the following chemical equation:

$$CO_2 + H_2 \longrightarrow CO + H_2O \qquad (11)$$

Because of this necessity there were soon developed new processes for reforming hydrocarbons by contacting the hydrocarbons with carbon dioxide, oxygen, steam or mixtures thereof. By varying the process conditions, it became possible to obtain methane reformation gas mixtures containing a carbon monoxide/hydrogen ratio of approximately 1:1.

However inconveniences and problems soon became apparent in these reforming processes. First, the reforming processes employ a great excess of steam, which is uneconomical. In order to alleviate this problem, it became necessary to carry out the process at high pressures. Second, the reforming

catalyst had a tendency to liberate free carbon during the reforming process with the elemental carbon depositing on the catalyst. This deposition of carbon on the catalyst usually caused a significant decrease in the catalyst activity and, more importantly, often caused total disintegration of the catalyst.

It is an object of the present invention to provide a one-step catalytic process for reforming hydrocarbons and more particularly, methane containing gases to obtain a product gas mixture containing about equal amounts of hydrogen and carbon monoxide.

A further object of the present invention is to provide a hydrocarbon reforming process which utilizes a specially prepared catalyst which is highly selective, highly resistant to carbon deposition, retains high activity even after deposition of carbon and allows for easy carbon removal without detrimental effect to the catalyst.

The present invention provides a one-step process for reforming light hydrocarbons and, more particularly, for reforming methane to a product gas mixture containing about equal proportions of carbon monoxide and hydrogen. In one embodiment of the present invention, methane is reformed by a process comprising contacting a methane containing gas with carbon dioxide in the presence of a catalytic amount of a catalyst comprising a porous catalyst support having a surface area of greater than 1 to less than about 350 $m^2/gm$ and a pore volume of about 0.4 to about 3 cc/gm and at least one Group VIII metal or mixture thereof on the pore surfaces of the support in the absence of steam.

The present invention provides an economical process for obtaining gas mixtures containing about equal proportions of carbon monoxide and hydrogen which can be used as feed gases in other processes.

The process of the present invention employs a one-step catalytic reaction according to the chemical equation:

$$CH_4 + CO_2 \longrightarrow 2\ CO + 2H_2 \qquad (III)$$

The temperature and pressure of the process can vary widely. Typically, the temperature of reformation is within the range of 350$^\circ$C to 850$^\circ$C, preferably from 500$^\circ$C to 750$^\circ$C. Although subatmospheric, atmospheric or superatmospheric pressures can be employed, low pressures from 1 atmosphere to 10 atmospheres (1 - 2 kg/cm$^2$) are preferred. Pressures which are particularly preferred are those of 1 to 2 atmospheres ( 1 - 2 kg/cm$^2$) since this permits the process to be conducted in the absence of steam.

The ratio of methane to carbon dioxide in the feed gas affects the ratio of carbon monoxide to hydrogen in the product gas mixtures and thus may be varied to obtain the $CO/H_2$ ratio desired. It has been found that higher concentrations of carbon dioxide in the reactant gas mixture will result in a product gas mixture containing about equal amounts of carbon monoxide and hydrogen. Typically, the feed gas molar ratios of carbon dioxide to methane can range from .75 to 1.8, preferably from 1.0 to 1.4 and, most preferably, from 1.1 to 1.3.

Although the invention particularly aims at reforming methane, any light hydrocarbon can be employed in the process of the present invention at the process conditions used herein for methane. For example, paraffins or olefins having from 1 to 4 carbon atoms, such as ethane, propane, butane, ethene, propene and butene, can be employed in this process, although product mixtures will change depending upon the process conditions and feed gas ratio employed. However, methane, the major constituent in natural gas, is preferred because of its abundance and low cost. Any gas containing at least 60% methane can be employed as the methane containing gas. Preferably, gases containing at least 80% and, most preferably, 90% methane are employed.

The reforming catalysts used in the process of the present invention have a relatively specific particle size distribution and density making the catalysts highly desirable for use in a fluid-bed operation. The reforming catalyst is composed of a porous fluid-bed support material having a specific combination of properties which is impregnated with a Group VIII metal in such a manner that the metal is present on the inside surfaces of the particle support or, more particularly, on the pore surfaces.

Particles composed of a porous particulate material such as silica impregnated with Group VIII metals are well known. However, the nature of the pores must be precisely selected to exhibit a precise combination of properties in order that the inventive reforming catalyst will exhibit the necessary properties.

Porous, particulate, free-flowing catalyst support materials for use in making fluid-bed catalysts are well known. Examples of such materials are silica, alumina, silica/alumina, zirconia, titania, hafnia, silicon carbide, boron phosphate, diamtomaceous earth and pumice.

In accordance with the invention, any such support material can be employed to make the inventive reforming catalyst, providing that such support material has a surface area of greater than 1 to less than 350 $m^2$/gm and a pore volume of 0.4 to 3cc/gm. Those supports having a surface area of 6 to 250 $m^2$/gm and pore volumes of 1 to 2 cc/gm are preferred. Most particularly preferred are those supports having a surface area of 30 to 80 $m^2$/gm and a pore volume of 1 to 2 cc/gm.

Especially preferred support materials are those as described above which are further characterized in containing no measurable pores having pore diameters less than 50 angstroms, preferably less than 80 angstroms, most preferably less than 100 angstroms when measured by the mercury porousimeter technique.

It is believed that the importance of the above surface

area and pore volume restrictions relates to the stability and integrity of the catalyst particles. High carbon deposition on the catalyst has been a continuing problem in hydrocarbon reforming processes. This carbon deposition results in low activity and eventual disintegration of the catalyst particle. However, the present invention alleviates this problem by requiring specific surface areas and pore volumes in the catalyst support material. For example, if carbon were allowed to grow in extremely small pores in the support particles, it would soon fill up those pores causing a decrease in activity in the catalyst. Continued growing of the carbon would additionally cause high stresses to be exerted on the particle skeleton which would ultimately lead to fracturing of the particles and catalyst disintegration. Thus, by eliminating the very small pores, the tendency of the particles to break up because of the high expansive stresses developed when the carbon material outgrows the growing space is eliminated.

Further, the large pore size results in high intersurface area which allows for an overall high catalyst to reactant contact area. By coating the intersurface area with the metal catalyst, there is a lower possibility of having significant amounts of the catalyst covered by elemental carbon.

As an additional benefit of the present invention, it appears that the reforming catalyst used according to the invention is less susceptible to carbon deposition and less is deposited on it. This may be due to the decreased exterior surface area available for carbon deposition and the constraints of formation within the pores.

Particulate support materials having the combination of properties described above can be prepared from commercially available porous support materials. In order to reduce the surface area of the support starting material, presumably for elimination of extremely small pores, various techniques can

be employed. Many techniques are known which will reduce surface area and otherwise adjust the pore structure of fluid-bed support materials, and any such technique can be employed in connection with suitable starting materials. For example, it is known that impregnation of a high surface area support material such as silica or alumina with ammonium heptamolybdate will, once the support is calcined in air or other atmospheres, significantly reduce the surface area of support material. Impregnation of silica with phosphoric acid followed by calcination in air is also known to significantly reduce the surface area of porous silica.

It is a particular advantage of the catalyst used according to the present invention that it can be employed in fluid-bed reactions. To those skilled in the art of fluid-bed reactions, it is well known that a solid which is to be fluidized must have an appropriate particle size distribution and density. Since the vast majority of the Group VIII metal will be incorporated into the support interior, the particle size distribution of the support will be similar or essentially the same as the particle size distribution of the reforming catalyst of the invention itself. Therefore, the support must exhibit a particle size distribution appropriate for use as a fluid-bed material. Normally, this means that at least 80% of the particulate support will have a particle size distribution ranging between 5 to 300, preferably 10 to 200, most preferably 20 to 150 microns.

Any Group VIII metal or a mixture thereof can be employed as the coating or impregnant. Although Pt, Pd, etc. can be utilized, iron, cobalt and nickel are preferred, while nickel is especially preferred.

The amount of the Group VIII metal in the support can vary widely. For convenience, the amount of Group VIII metal can be defined in terms of single layers of the Group VIII metal based on the measured surface area of the support to be

impregnated. In other words, based on the surface area of the support to be impregnated and the atomic radius of the Group VIII metal to be deposited on the pore surfaces of the support, the total number of atoms and hence the total number of moles of Group VIII metal needed completely to coat all of the surfaces of the particles with a single layer of the Group VIII metal one atom thick can be calculated. Also for convenience, the amount of Group VIII metal impregnated into the support can be referred to in terms of multiples of fractions of such layers.

It has been found that the amount of Group VIII metal impregnated into the support particles should be at least about one layer. As the metal loading increases above one layer, the performance of the catalyst increases rapidly with catalysts having a metal loading corresponding to two layers exhibiting excellent activity. Although theoretically there is no maximum to the amount of metal loadings, too much metal will fill the pores of the support reducing the pores overall capacity to accept carbon and increasing the catalyst tendency to deactivate and/or disintegrate. Metal loadings on the order of 1.5 to 3.0 are preferred with metal loadings of the order of 2 layers being especially preferred.

Additionally, it is desirable to have catalyst particles having low external surface areas. Although the overall surface area should be relatively high, the amount of surface area attributable to the external surfaces of the particles should be essentially negligible. This ensures high amounts of the Group VIII metal depositing on the surface of the pores in the body of the support particles rather than on the external surface of the particle.

The Group VIII metal can be deposited into the pores of the pore support by any of the well known techniques for accomplishing such impregnations. In general, this is accomplished by impregnating the porous support material with

a liquid containing the Group VIII metal or a compound thereof in solution, drying and, if necessary, heat treating in an appropriate atmosphere or series of atmospheres so as to provide the metal in elemental form. For example, organic compounds, such as iron carbonyl, dissolved in a suitable organic solvent, such as n-pentane, could be employed as the impregnating solution. Further, organic salts of Group VIII metals dissolved in organic solutions (e.g. methanol) could be used as impregnating solutions.

One of the important advantages to using reforming catalysts prepared according to the above techniques, is the resistance of these catalysts to carbon deposition. However, it has been found that the catalyst does not exhibit a significantly decreased reactivity or slectivity when small amounts of carbon are deposited on the catalyst. Further, when carbon does deposit on the catalyst, it can be removed without detrimental affect. For example, the carbon can be removed simply by contacting the catalyst with steam or hydrogen without inactivating the catalyst.

The following Examples illustrate the invention:

## Example 1

### Catalyst Preparation

The support material was first processed according to the following procedure. Commercially avilable $SiO_2$ (80.0 gms) was mixed in an autoclave with a solution of 0.56 gms of $K_2CO_3$ and 200 ml of distilled water. The autoclave was brought to 230°C and maintained at that temperature for 30 minutes at 400 psig (28 $kg/cm^2g$). After 30 minutes, the autoclave was rapidly cooled by flushing water through a loop within the autoclave and bringing the pressure down to atmospheric within 2 minutes. The silica was then removed from the reactor, washed three times with 100 ml aliquots of distilled water and then dried overnight in air at 110°C.

A nickel solution was prepared by dissolving 47.55 gms

of $Ni(NO_3)_2$ 6 $H_2O$ a minimum amount of water, approximately 20 cc. This solution was added dropwise with stirring to 54.15 gms of the hydrothermally treated silica described above. The addition was done gradually and with enough stirring to maintain a homogeneous appearance on the catalyst. The impregnated catalyst was dried overnight at 110°C in air. The catalyst was then calcined in air at 150°C for 30 minutes and further at 400°C for an additional 6 hours. Next, the catalyst was placed in a 25 mm inside diameter quartz fluid-bed reactor. The catalyst was contacted with hydrogen at 129 cc/min at 550°C for 90 minutes. After 90 minutes, the temperature was raised to 650°C for 30 minutes. The catalyst was then cooled in an atmosphere of nitrogen and removed from the reactor once reaching room temperature. At room temperature, the catalyst was stable to atmospheric oxygen. The catalyst contained about 15% nickel by weight.

Methane Reformation

The above-prepared catalyst (20 cc) was placed in a 25 mm inside diameter quartz tube. The catalyst was contacted with a feed gas mixture of $CO_2/CH_4$ in a molar ratio of 1.25 at 725°C and atmospheric pressure. A product gas was produced containing 91.07% $CO/H_2$ in a molar ratio of 1.097.

## Examples 2 through 6

Examples 2 through 6 were performed in accordance to the procedure of Example 1 and illustrate various reforming processes at various temperatures. The results are set out in Table I. Table I also shows the superior results obtained by the use of the reforming catalyst according to the invention as compared to the commercially available reforming catalyst.

In Examples A and B, a commercial reforming catalyst having about 15.5% nickel by weight supported on silica

(available from Union Catalyst, Inc.) was employed in the reforming process under two identical conditions as was the inventive reforming catalyst. Comparing Example 1 to Example A and Example 4 to Example B, respectively, significantly higher conversions and selectively are observed with the inventive reforming catalyst. Surprisingly, the reforming catalyst used according to the invention shows a much higher resistance to carbon deposition than does the commercial catalyst.

TABLE I

| Exp | Temp (°C) | Molar Ratio of CO/H2 in Product | Unconv CH4 (%) | Conv (%) | Carbon Deposit (g) | Prod H20 (g) | Select (%) |
|---|---|---|---|---|---|---|---|
| 1 | 725 | 1.097 | 8.96 | 91.07 | 0.05 | 0.08 | 97.2 |
| 2 | 700 | 1.040 | 11.12 | 88.86 | * | 0.19 | 93.1 |
| 3 | 650 | 1.019 | 31.71 | 68.29 | 0.31 | 0.31 | 85.4 |
| 4 | 600 | 1.120 | 55.09 | 44.91 | 0.17 | 0.31 | 77.8 |
| 5 | 550 | 1.081 | 50.23 | 49.71 | 0.22 | 0.33 | 78.6 |
| 6 | 500 | 2.760 | 92.60 | 7.40 | 0.05 | 0 | 0 |
| A | 725 | 1.077 | 29.53 | 70.53 | 0.45 | 0.28 | 87.2 |
| B | 600 | 1.303 | 65.49 | 34.51 | 0.60 | 0.39 | 63.60 |

* No data available.

CLAIMS:

1. A one-step process for reforming light hydrocarbons selected from olefins having from 2 to 4 carbon atoms and paraffins having from 1 to 4 carbon atoms, to a product gas mixture containing at least carbon monoxide and hydrogen comprising contacting said light hydrocarbons with carbon dioxide in the presence of a catalytic amount of a catalyst comprising a porous catalyst support having a surface area greater than 1 to less than 350 $m^2/gm$ and a pore volume of 0.4 to 3 cc/gm and at least one Group VIII metal or mixture thereof on a pore surface of the support in the absence of steam.

2. A process as claimed in Claim 1 characterised in that the light hydrocarbon is methane.

3. A process as claimed in Claim 1 or Claim 2 characterised in that the surface area of the catalyst support is from 6 to 250 $m^2/gm$ and the pore volume is from 1 to 2 cc/gm.

4. A process as claimed in any of the Claims 1 to 3 characterised in that the catalyst support exhibits no measurable pores having a pore diameter of less than 50 angstroms.

5. A process as claimed in any of Claims 1 to 4 characterised in that the catalyst support is silica.

6. A process as claimed in any of Claims 1 to 5 characterised in that the Group VIII metal is iron, cobalt or nickel.

7. A process as claimed in any of claims 1 to 6 characterised in that the Group VIII metal is nickel.

8. A process as claimed in any of Claims 1 to 8 characterised in that the reforming is carried out at a temperature of from 350°C to 850°C.

9. A process as claimed in any of Claims 1 to 8 characterised in that the reforming is carried out at a pressure of from 1 to 2 atmospheres ( 1 - 2 $kg/cm^2$).

10. A process as claimed in any of claims 1 to 9 characterised in that the Group VIII metal is present on the pore surface of the support in an amount of 1.5 to 3 layers.